# EUROPEAN PATENT APPLICATION

(11) **EP 4 245 761 A1**
(43) Date of publication of application: **20.09.2023**
(21) Application number: 21891692.2
(22) Date of filing: 01.11.2021
(51) Int. Cl.: C07F 7/18

(54) **METHOD FOR PRODUCING COMPOSITION CONTAINING ORGANOSILICON COMPOUND, AND COMPOSITION CONTAINING ORGANOSILICON COMPOUND**

(30) Priority: 16.11.2020 JP 2020189968
(71) Applicant: SHIN-ETSU CHEMICAL CO., LTD., Tokyo 1000005 (JP)
(72) Inventor: HIROKAMI Munenao, Annaka-shi, Gunma 379-0224 (JP); TSUCHIDA Kazuhiro, Annaka-shi, Gunma 379-0224 (JP)
(74) Representative: Mewburn Ellis LLP
(86) International application number: PCT/JP2021/040202
(87) International publication number: WO 2022/102445

(57) **Abstract**

A method for producing a composition containing compounds (A) and (B), wherein: an organosilicon compound represented by formula (3), an alkali metal cyanate represented by formula (4) and an amide compound represented by formula (5) are reacted with each other at 120°C or less, thereby producing an organosilicon compound (A) represented by formula (1); and this organosilicon compound (A) is obtained in a composition that contains this organosilicon compound (A) and an organosilicon compound (B), which is a by-product of the above-described reaction and is represented by formula (2).

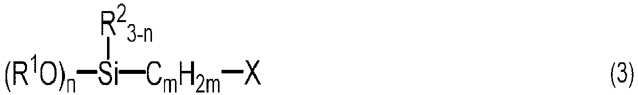

M-OCN (4)

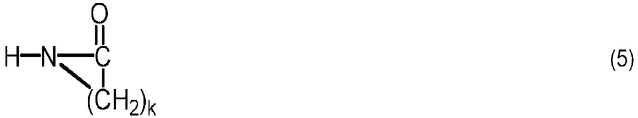

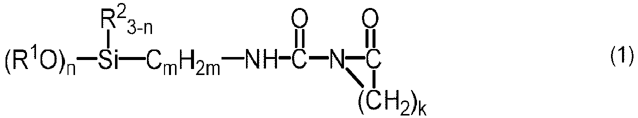

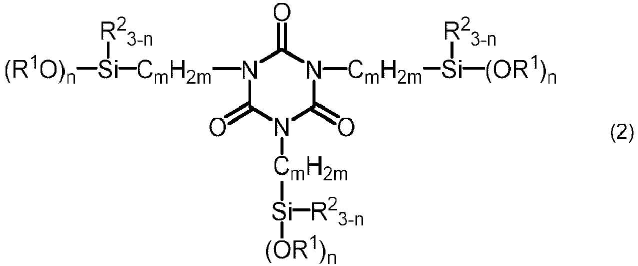

(In the formulae, each of R¹ and R² is an alkyl group or the like; X is a halogen atom; M is an alkali metal; m is an integer from 1 to 10; n is an integer from 1 to 3; and k is an integer from 1 to 10.)

## Description

### TECHNICAL FIELD

The present invention relates to a method for producing a composition containing an organosilicon compound and a composition containing an organosilicon compound.

### BACKGROUND ART

Polyamide resins reinforced with glass fibers or the like are excellent in abrasion resistance, cold resistance, and impact resistance, and thus are widely used, and various studies have been made on filling properties and dispersibility of glass fibers, properties of reinforcing resins, and the like.

For example, Patent Document 1 has reported that by using an organosilicon compound having a caprolactam ring, glass fibers and a polyamide resin can be firmly bonded, and resin characteristics can be improved.

Patent Document 2 has reported a method for producing an organosilicon compound having a caprolactam ring. Patent Document 2 has proposed a method for producing an organosilicon compound having a caprolactam ring by reacting an alkylsilane halide, caprolactam, and an alkali metal cyanate. In this method, a nurate such as an isocyanurate derivative produced as a by-product causes significant deterioration in aqueous solution stability of the entire product.

On the other hand, Patent Document 1 has proposed a method for producing an organosilicon compound having a caprolactam ring by reacting an isocyanate group-containing organosilicon compound with caprolactam. This method can prevent by-products of a nurate, but the isocyanate group-containing organosilicon compound is expensive, and thus has a problem in terms of economic efficiency.

### PRIOR ART DOCUMENTS

### PATENT DOCUMENTS

Patent Document 1: US 2010/0280239 A
Patent Document 2: JP-A S62-12786

### SUMMARY OF THE INVENTION

### TECHNICAL PROBLEM

The present invention has been made in view of the above circumstances. An object of the present invention is to provide a method for producing a composition containing an organosilicon compound having a lactam ring with aqueous solution stability ensured by a simple and economical method.

### SOLUTION TO PROBLEM

As a result of intensive studies to achieve the above object, the present inventors have found that when a reaction for producing an organosilicon compound having a lactam ring by reacting an alkylsilane halide, a cyclic amide compound such as caprolactam, and an alkali metal cyanate is performed under specific conditions, by-production of a nurate such as an isocyanurate derivative can be suppressed, and the aqueous solution stability of a composition containing an organosilicon compound having a lactam ring to be obtained can be improved, thereby completing the present invention.

Accordingly, the present invention provides:
1. A method for producing a composition containing an organosilicon compound (A) having the following formula (1) and an organosilicon compound (B) having the following formula (2), the method including reacting an organosilicon compound having the following formula (3), an alkali metal cyanate having the following formula (4), and an amide compound having the following formula (5) at 120°C or lower to produce the organosilicon compound (A), and obtaining the organosilicon compound (A) as a composition containing the organosilicon compound (A) and the organosilicon compound (B) produced as a by-product by the reaction: 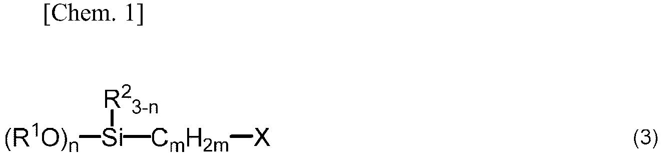 wherein R¹ is each independently a hydrogen atom, an alkyl group having 1 to 10 carbon atoms, or an aryl group having 6 to 10 carbon atoms, R² is each independently an alkyl group having 1 to 10 carbon atoms or an aryl group having 6 to 10 carbon atoms, X is a halogen atom, m is an integer of 1 to 10, and n is an integer of 1 to 3,
   [Chem. 2]

   M-OCN (4)

   wherein M is an alkali metal, 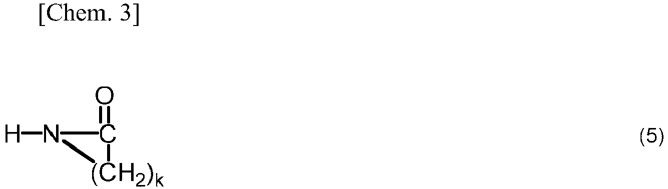 wherein k is an integer of 1 to 10, 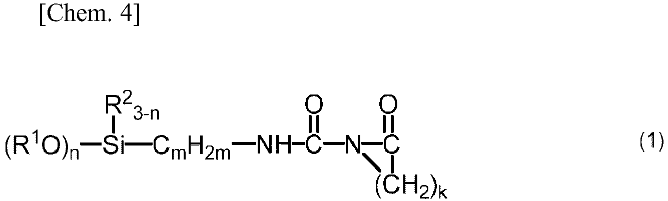 wherein R¹, R², m, n and k are the same as described above, 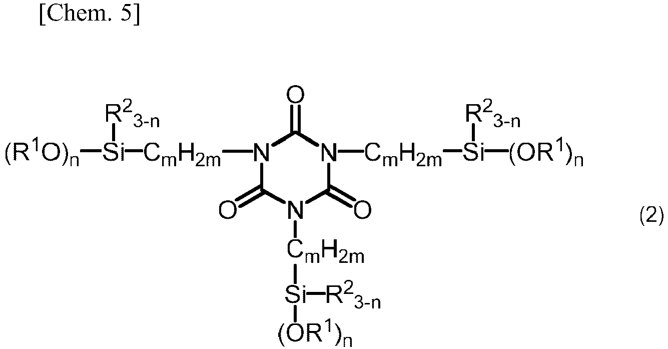 wherein R¹, R², m and n are the same as described above;
2. The production method according to 1, wherein k is 5, and R¹ is a methyl group or an ethyl group;
3. A composition containing an organosilicon compound (A) having the following formula (1) and an organosilicon compound (B) having the following formula (2),
   wherein the ratio of the peak area of the organosilicon compound (B) to the total peak area of the organosilicon compound (A) and the organosilicon compound (B) in gel permeation chromatography is 0.1 to 10%: 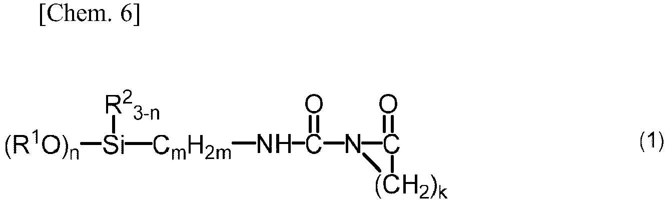 wherein R¹ is each independently a hydrogen atom, an alkyl group having 1 to 10 carbon atoms, or an aryl group having 6 to 10 carbon atoms, R² is each independently an alkyl group having 1 to 10 carbon atoms or an aryl group having 6 to 10 carbon atoms, m is an integer of 1 to 10, n is an integer of 1 to 3, and k is an integer of 1 to 10, 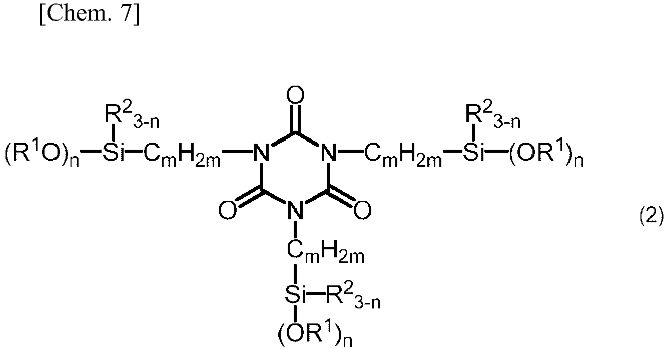 wherein R¹, R², m and n are the same as described above;
4. The composition according to 3, wherein k is 5, and R¹ is a methyl group or an ethyl group;
5. A method for reducing by-products, which method reduces the content of an organosilicon compound (B) having the following formula (2) in an organosilicon compound (A) having the following formula (1) when an organosilicon compound having the following formula (3), an alkali metal cyanate having the following formula (4), and an amide compound having the following formula (5) are reacted to produce the organosilicon compound (A),
   wherein the reaction is performed at 120°C or lower: 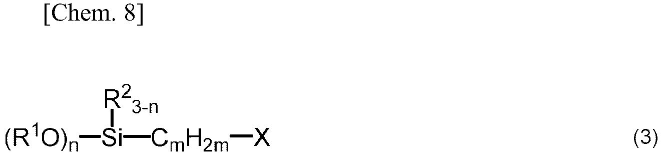 wherein R¹ is each independently a hydrogen atom, an alkyl group having 1 to 10 carbon atoms, or an aryl group having 6 to 10 carbon atoms, R² is each independently an alkyl group having 1 to 10 carbon atoms or an aryl group having 6 to 10 carbon atoms, X is a halogen atom, m is an integer of 1 to 10, and n is an integer of 1 to 3,
   [Chem. 9]

   M-OCN (4)

   wherein M is an alkali metal, 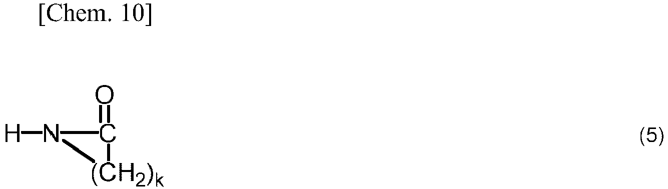 wherein k is an integer of 1 to 10, 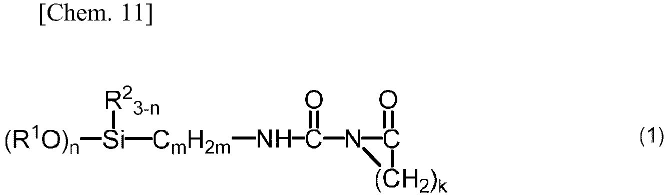 wherein R¹, R², m, n and k are the same as described above, 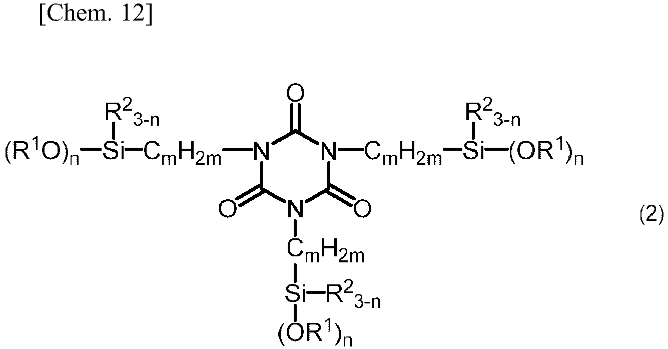 wherein R¹, R², m and n are the same as described above; and
6. The method for reducing by-products according to 5, wherein the content of the organosilicon compound (B) is such that the ratio of the peak area of the organosilicon compound (B) to the total peak area of the organosilicon compound (A) and the organosilicon compound (B) in gel permeation chromatography is 0.1 to 10%.

### ADVANTAGEOUS EFFECTS OF THE INVENTION

In the production method of the present invention, a composition containing an organosilicon compound having a lactam ring can be simply and economically obtained, and the ratio of a nurate can be kept low. An aqueous solution to which this composition is added can satisfy stability.

### DESCRIPTION OF THE EMBODIMENTS

Hereinafter, the present invention is specifically described.

In the production method of the present invention, an organosilicon compound having the following formula (3), an alkali metal cyanate having the following formula (4), and an amide compound having the following formula (5) are reacted under predetermined conditions to obtain an organosilicon compound (A) having the following formula (1) as a composition together with an organosilicon compound (B) having the following formula (2) produced as a by-product of the reaction.

### [Reactant organosilicon compound]

A reactant organosilicon compound used in the present invention is represented by the following formula (3):

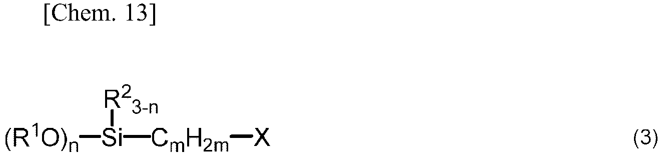

In formula (3), R¹ is each independently a hydrogen atom, an alkyl group having 1 to 10 carbon atoms, or an aryl group having 6 to 10 carbon atoms, R² is each independently an alkyl group having 1 to 10 carbon atoms or an aryl group having 6 to 10 carbon atoms.

The alkyl group having 1 to 10 carbon atoms, preferably 1 to 8 carbon atoms of R¹ and R² may be linear, cyclic, or branched, and examples include methyl, ethyl, n-propyl, i-propyl, n-butyl, s-butyl, t-butyl, n-pentyl, n-hexyl, n-heptyl, n-octyl, n-nonyl, n-decyl, cyclopropyl, cyclobutyl, cyclopentyl, cyclohexyl, cycloheptyl, and cyclooctyl groups.

Examples of the aryl group having 6 to 10 carbon atoms, preferably 6 to 8 carbon atoms include phenyl, α-naphthyl, and β-naphthyl groups.

Among them, R¹ is preferably an alkyl group of 1 to 6 carbon atoms, more preferably a methyl group or an ethyl group, and even more preferably a methyl group.

R² is preferably a linear alkyl group, and more preferably a methyl group or an ethyl group.

X is a halogen atom, and examples include a chlorine atom, a bromine atom, and an iodine atom.

m is an integer of 1 to 10, preferably an integer of 1 to 8, and more preferably 3.

n is an integer of 1 to 3, preferably 2 or 3, and more preferably 3.

Illustrative, non-limiting, examples of the organosilicon compound having the formula (3) include 3-chloropropyltrimethoxysilane, 3-chloropropyltriethoxysilane, 3 -bromopropyltrimethoxysilane, 3 -bromopropyltriethoxysilane, 3-chloropropyldimethoxymethylsilane, 3-chloropropyldiethoxymethylsilane, 3-bromopropyldimethoxymethylsilane, 3-bromopropyldiethoxymethylsilane, 3-chloropropyldimethylmethoxysilane, 3-chloropropyldimethylethoxysilane, 3-bromopropyldimethylmethoxysilane, and 3-bromopropyldimethylethoxysilane. These can be used alone or in combination of two or more.

### [Alkali metal cyanate]

The alkali metal cyanate used in the present invention is represented by the following formula (4):
[Chem. 14]

M-OCN (4)

In formula (4), M is an alkali metal, and examples include sodium and potassium.

Examples of the alkali metal cyanate having the formula (4) include sodium cyanate and potassium cyanate.

The alkali metal cyanate is preferably used in an amount of 0.1 to 3 mol, and more preferably 0.5 to 2 mol, based on 1 mol of the organosilicon compound having the formula (3).

### [Amide compound]

The amide compound used in the present invention is represented by the following formula (5):

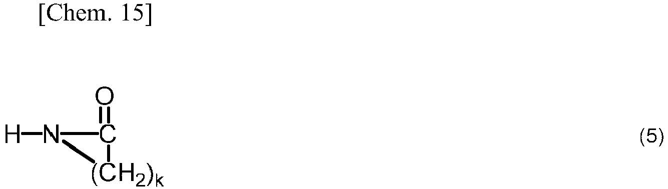

In formula (5), k is an integer of 1 to 10, but is preferably an integer of 3 to 6, and more preferably 5.

Examples of the amide compound having the formula (5) include 2-pyrrolidone, 2-piperidone, and ε-caprolactam.

The amide compound is preferably used in an amount of 0.1 to 3 mol, and more preferably 0.5 to 2 mol, based on 1 mol of the organosilicon compound having the formula (3).

While the above reaction may proceed in the absence of a solvent, but a solvent may be used if necessary. Examples of the solvent used may be any solvent as long as it does not inhibit the reaction, and examples include hydrocarbon solvents such as pentane, hexane, cyclohexane, heptane, isooctane, benzene, toluene, and xylene; ether solvents such as diethyl ether, tetrahydrofuran, and dioxane; ester solvents such as ethyl acetate and butyl acetate; aprotic polar solvents such as N,N-dimethylformamide; and chlorinated hydrocarbon solvents such as dichloromethane and chloroform, which may be used alone or in combination of two or more.

When the solvent is used, it is preferably added in an amount of 50 to 300 parts by weight, and more preferably 50 to 200 parts by weight, per 100 parts by weight of the total amount of the organosilicon compound, the alkali metal cyanate, and the amide compound.

The reaction temperature is 120°C or lower, and it can be usually carried out at 0 to 120°C. From the viewpoint of obtaining an appropriate reaction rate, the reaction temperature is preferably 90 to 120°C, and more preferably 100 to 115°C. If the reaction temperature exceeds 120°C, the ratio of the organosilicon compound (B) produced as a by-product increases, and aqueous solution stability of the composition decreases.

Also, the reaction time is not particularly limited, but is usually about 1 to 30 hours, preferably 1 to 25 hours, more preferably 1 to 20 hours, and further preferably more than 8 hours and 15 hours or less.

After completion of the reaction, normal treatment is performed to obtain a composition containing the produced organosilicon compound (A) having the following formula (1) and the by-produced organosilicon compound (B) having the following formula (2). It is noted that the composition obtained by the production method of the present invention may contain other components such as a hydrolysis condensate of the organosilicon compound (A) and the like. 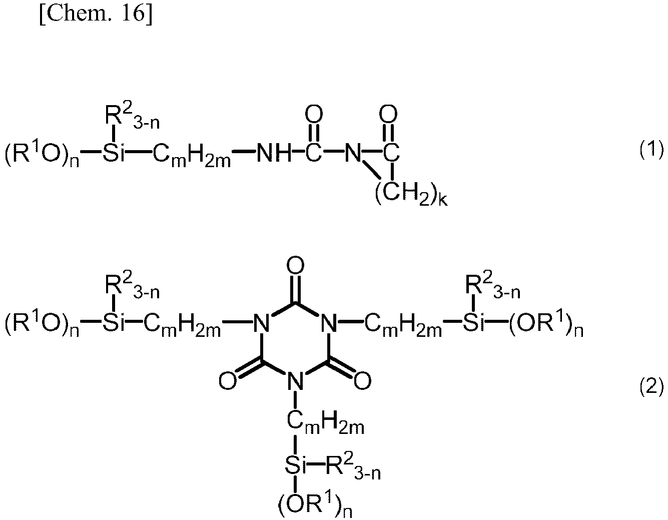 wherein R¹, R², m, n and k are as defined above.

Illustrative, non-limiting, examples of the organosilicon compound (A) having the formula (1) include the following ones.

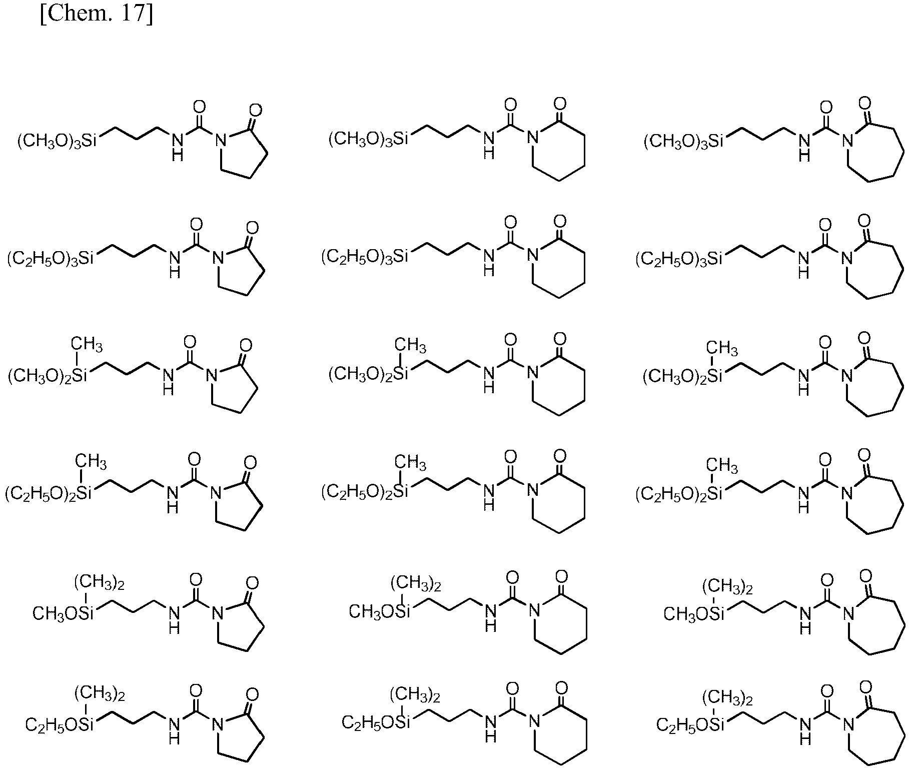

Illustrative, non-limiting, examples of the organosilicon compound (B) having the formula (2) include the following ones.

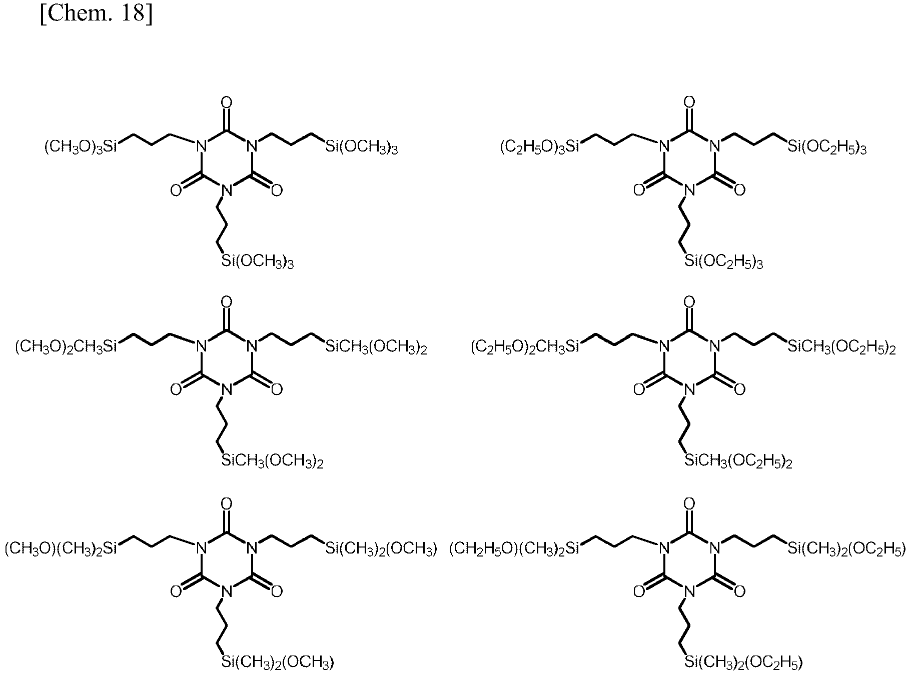

In gel permeation chromatography of the composition obtained by the production method of the present invention, the ratio of the peak area of the organosilicon compound (B) to the total peak area of the organosilicon compound (A) and the organosilicon compound (B) is 0.1 to 10%, preferably 1 to 8%. If the ratio exceeds 10%, the aqueous solution stability of the composition is reduced.

The gel permeation chromatography can be measured, for example, by the apparatus and conditions described in Examples.

Also, in the gel permeation chromatography of the composition obtained by the production method of the present invention, the ratio of the peak area of the organosilicon compound (A) to the peak area of the entire composition is preferably 50% or more. Within such a range, the stability of the aqueous solution can be further improved.

### EXAMPLES

Examples and Comparative Examples are given below for further illustrating the invention although the invention is not limited thereto.

Notably, kinematic viscosity is a value measured at 25°C using a Cannon-Fenske viscometer.

Gel permeation chromatography (GPC) was measured under the following conditions using the following apparatus.

| | |
|---|---|
| Apparatus: | HLC-8220GPC (manufactured by Tosoh Corporation) |
| Detector: | RI |
| Column: | TSKgel GMHXL-L (manufactured by Tosoh Corporation) |
| | TSKgel SuperH4000 (manufactured by Tosoh Corporation) |
| | TSKgel SuperH2000 (manufactured by Tosoh Corporation) |
| Solvent: | tetrahydrofuran |
| Flow rate: | 0.6 mL/min |

### [1] Production of composition

### [Example 1-1]

A one-litter separable flask equipped with a stirrer, a reflux condenser, a dropping funnel, and a thermometer was charged with 136 g (1.2 mol) of ε-caprolactam, 97 g (1.2 mol) of potassium cyanate, and 500 g of dimethylformamide. Then, 238 g (1.2 mol) of 3-chloropropyltrimethoxysilane was added dropwise over 1 hour at an internal temperature of 110 to 115°C, and then the mixture was stirred at 110°C for 10 hours. Following the completion of stirring, vacuum condensation at 90°C and filtration were carried out, giving a brown transparent liquid having a kinematic viscosity of 50 mm²/s.

When the obtained liquid was analyzed by GPC, it was found that the area percentage of the peak of the organosilicon compound (A) [in the formula (1), R¹ = methyl group, m = 3, n = 3, k = 5] in the entire reaction product was 83%, the area percentage of the peak of the organosilicon compound (B) [in the formula (2), R¹ = methyl group, m = 3, n = 3] was 5%, and the ratio of the peak area of the component (B) to the total peak areas of the component (A) and the component (B) was 5.7%.

### [Example 1-2]

A one-litter separable flask equipped with a stirrer, a reflux condenser, a dropping funnel, and a thermometer was charged with 136 g (1.2 mol) of ε-caprolactam, 97 g (1.2 mol) of potassium cyanate, and 500 g of dimethylformamide. Then, 289 g (1.2 mol) of 3-chloropropyltriethoxysilane was added dropwise over 1 hour at an internal temperature of 110 to 115°C, and then the mixture was stirred at 110°C for 10 hours. Following the completion of stirring, vacuum condensation at 90°C and filtration were carried out, giving a brown transparent liquid having a kinematic viscosity of 30 mm²/s.

When the obtained liquid was analyzed by GPC, it was found that the area percentage of the peak of the organosilicon compound (A) [in the formula (1), R¹ = ethyl group, m = 3, n = 3, k = 5] in the entire reaction product was 85%, the area percentage of the peak of the organosilicon compound (B) [in the formula (2), R¹ = ethyl group, m = 3, n = 3] was 3%, and the ratio of the peak area of the component (B) to the total peak areas of the component (A) and the component (B) was 3.4%.

### [Example 1-3]

A one-litter separable flask equipped with a stirrer, a reflux condenser, a dropping funnel, and a thermometer was charged with 136 g (1.2 mol) of ε-caprolactam, 97 g (1.2 mol) of potassium cyanate, and 500 g of dimethylformamide. Then, 219 g (1.2 mol) of 3-chloropropyldimethoxymethylsilane was added dropwise over 1 hour at an internal temperature of 110 to 115°C, and then the mixture was stirred at 110°C for 10 hours. Following the completion of stirring, vacuum condensation at 90°C and filtration were carried out, giving a brown transparent liquid having a kinematic viscosity of 45 mm²/s.

When the obtained liquid was analyzed by GPC, it was found that the area percentage of the peak of the organosilicon compound (A) [in the formula (1), R¹ = methyl group, R² = methyl group, m = 3, n = 2, k = 5] in the entire reaction product was 84%, the area percentage of the peak of the organosilicon compound (B) [in the formula (2), R¹ = methyl group, R² = methyl group, m = 3, n = 2] was 5%, and the ratio of the peak area of the component (B) to the total peak areas of the component (A) and the component (B) was 5.6%.

### [Example 1-4]

A one-litter separable flask equipped with a stirrer, a reflux condenser, a dropping funnel, and a thermometer was charged with 136 g (1.2 mol) of ε-caprolactam, 97 g (1.2 mol) of potassium cyanate, and 500 g of dimethylformamide. Then, 253 g (1.2 mol) of 3-chloropropyldiethoxymethylsilane was added dropwise over 1 hour at an internal temperature of 110 to 115°C, and then the mixture was stirred at 110°C for 10 hours. Following the completion of stirring, vacuum condensation at 90°C and filtration were carried out, giving a brown transparent liquid having a kinematic viscosity of 25 mm²/s.

When the obtained liquid was analyzed by GPC, it was found that the area percentage of the peak of the organosilicon compound (A) [in the formula (1), R¹ = ethyl group, R² = methyl group, m = 3, n = 2, k = 5] in the entire reaction product was 86%, the area percentage of the peak of the organosilicon compound (B) [in the formula (2), R¹ = ethyl group, R² = methyl group, m = 3, n = 2] was 3%, and the ratio of the peak area of the component (B) to the total peak areas of the component (A) and the component (B) was 3.4%.

### [Example 1-5]

A one-litter separable flask equipped with a stirrer, a reflux condenser, a dropping funnel, and a thermometer was charged with 136 g (1.2 mol) of ε-caprolactam, 97 g (1.2 mol) of potassium cyanate, and 500 g of dimethylformamide. Then, 289 g (1.2 mol) of 3-chloropropyltriethoxysilane was added dropwise over 1 hour at an internal temperature of 110 to 115°C, and then the mixture was stirred at 120°C for 10 hours. Following the completion of stirring, vacuum condensation at 90°C and filtration were carried out, giving a brown transparent liquid having a kinematic viscosity of 55 mm²/s.

When the obtained liquid was analyzed by GPC, it was found that the area percentage of the peak of the organosilicon compound (A) [in the formula (1), R¹ = ethyl group, m = 3, n = 3, k = 5] in the entire reaction product was 80%, the area percentage of the peak of the organosilicon compound (B) [in the formula (2), R¹ = ethyl group, m = 3, n = 3] was 7%, and the ratio of the peak area of the component (B) to the total peak areas of the component (A) and the component (B) was 8.0%.

### [Comparative Example 1-1]

Manufacture was carried out with reference to Example of synthesis disclosed in JP-A S62-12786. A one-litter separable flask equipped with a stirrer, a reflux condenser, a dropping funnel, and a thermometer was charged with 136 g (1.2 mol) of ε-caprolactam, 97 g (1.2 mol) of potassium cyanate, and 500 g of dimethylformamide. Then, 289 g (1.2 mol) of 3-chloropropyltriethoxysilane was added dropwise over 1 hour at an internal temperature of 130°C, and then the mixture was stirred at 130°C for 5 hours. Following the completion of stirring, vacuum condensation at 130°C and filtration were carried out, giving a brown transparent liquid having a kinematic viscosity of 70 mm²/s.

When the obtained liquid was analyzed by GPC, it was found that the area percentage of the peak of the organosilicon compound (A) [in the formula (1), R¹ = ethyl group, m = 3, n = 3, k = 5] in the entire reaction product was 70%, the area percentage of the peak of the organosilicon compound (B) [in the formula (2), R¹ = ethyl group, m = 3, n = 3] was 15%, and the ratio of the peak area of the component (B) to the total peak areas of the component (A) and the component (B) was 17.6%.

### [2] Preparation of aqueous solution

### [Examples 2-1 to 2-5, Comparative Example 2-1]

One gram of each of the liquids (compositions) 1 to 6 obtained in Examples 1-1 to 1-5 and Comparative Example 1-1 and 99 g of 0.2 % by weight acetic acid water were mixed and stirred for 12 hours, and appearance of the aqueous solution was confirmed to determine water solubility according to the following indices.

Furthermore, appearance of the aqueous solution after a lapse of a predetermined time was confirmed to determine water solubility stability according to the following indices. Results are shown in Table 1.
○: The solution is completely dissolved and transparent.
△: A gelled product is slightly generated, but the solution is transparent.
×: A gelled product is generated, and the solution is cloudy.

**[Table 1]**

| | Composition | Immediately after preparation | After 1 day | After 3 days | After 7 days |
|---|---|---|---|---|---|
| Example 2-1 | Example 1-1 | ○ | ○ | ○ | ○ |
| Example 2-2 | Example 1-2 | ○ | ○ | ○ | △ |
| Example 2-3 | Example 1-3 | ○ | ○ | ○ | ○ |
| Example 2-4 | Example 1-4 | ○ | ○ | ○ | △ |
| Example 2-5 | Example 1-5 | ○ | ○ | △ | × |
| Comparative Example 2-1 | Comparative Example 1-1 | △ | × | × | × |

## Claims

1. A method for producing a composition comprising an organosilicon compound (A) having the following formula (1) and an organosilicon compound (B) having the following formula (2), the method comprising reacting an organosilicon compound having the following formula (3), an alkali metal cyanate having the following formula (4), and an amide compound having the following formula (5) at 120°C or lower to produce the organosilicon compound (A), and obtaining the organosilicon compound (A) as a composition comprising the organosilicon compound (A) and the organosilicon compound (B) produced as a by-product of the reaction: 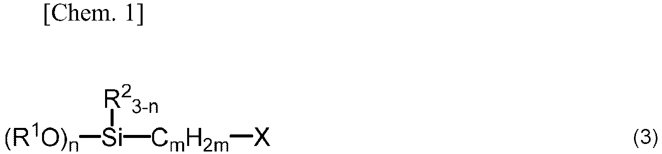 wherein R¹ is each independently a hydrogen atom, an alkyl group having 1 to 10 carbon atoms, or an aryl group having 6 to 10 carbon atoms, R² is each independently an alkyl group having 1 to 10 carbon atoms or an aryl group having 6 to 10 carbon atoms, X is a halogen atom, m is an integer of 1 to 10, and n is an integer of 1 to 3,
[Chem. 2]
M-OCN (4)
wherein M is an alkali metal, 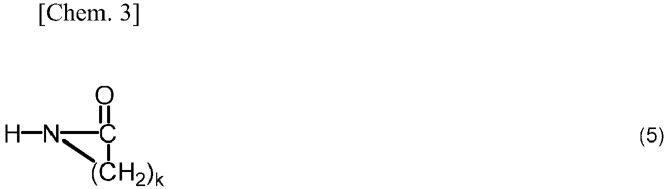 wherein k is an integer of 1 to 10, 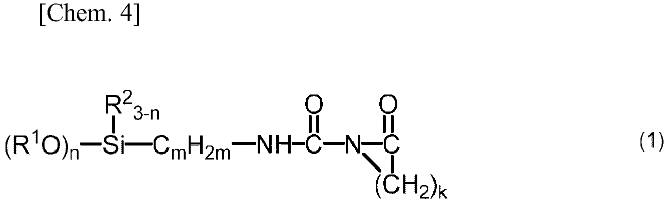 wherein R¹, R², m, n and k are the same as described above, 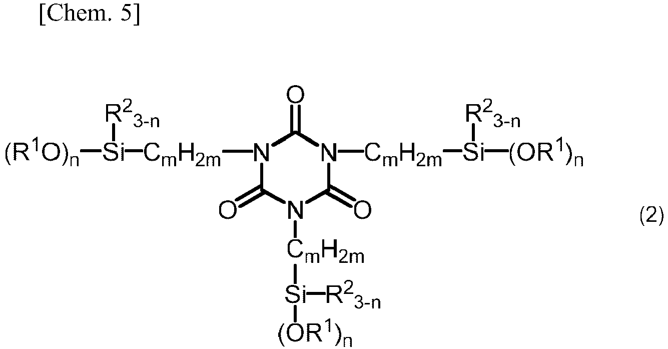 wherein R¹, R², m and n are the same as described above.

2. The production method according to claim 1, wherein k is 5, and R¹ is a methyl group or an ethyl group.

3. A composition comprising an organosilicon compound (A) having the following formula (1) and an organosilicon compound (B) having the following formula (2),
wherein the ratio of the peak area of the organosilicon compound (B) to the total peak area of the organosilicon compound (A) and the organosilicon compound (B) in gel permeation chromatography is 0.1 to 10%: 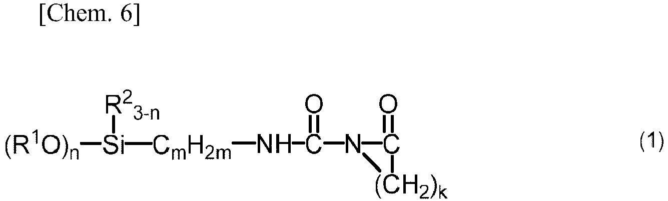 wherein R¹ is each independently a hydrogen atom, an alkyl group having 1 to 10 carbon atoms, or an aryl group having 6 to 10 carbon atoms, R² is each independently an alkyl group having 1 to 10 carbon atoms or an aryl group having 6 to 10 carbon atoms, m is an integer of 1 to 10, n is an integer of 1 to 3, and k is an integer of 1 to 10, 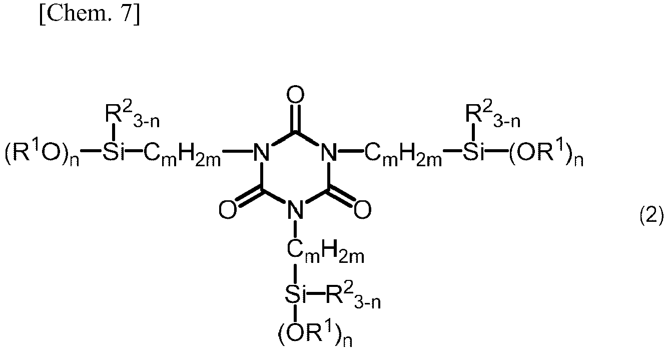 wherein R¹, R², m and n are the same as described above.

4. The composition according to claim 3, wherein k is 5, and R¹ is a methyl group or an ethyl group.

5. A method for reducing by-products, which method reduces the content of an organosilicon compound (B) having the following formula (2) in an organosilicon compound (A) having the following formula (1) when an organosilicon compound having the following formula (3), an alkali metal cyanate having the following formula (4), and an amide compound having the following formula (5) are reacted to produce the organosilicon compound (A),
wherein the reaction is performed at 120°C or lower: 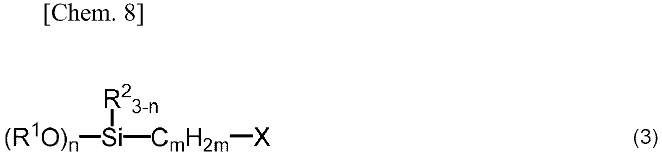 wherein R¹ is each independently a hydrogen atom, an alkyl group having 1 to 10 carbon atoms, or an aryl group having 6 to 10 carbon atoms, R² is each independently an alkyl group having 1 to 10 carbon atoms or an aryl group having 6 to 10 carbon atoms, X is a halogen atom, m is an integer of 1 to 10, and n is an integer of 1 to 3,
[Chem. 9]
M-OCN (4)
wherein M is an alkali metal, 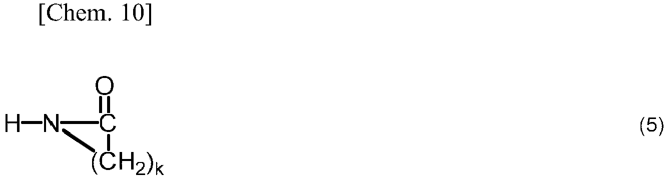 wherein k is an integer of 1 to 10, 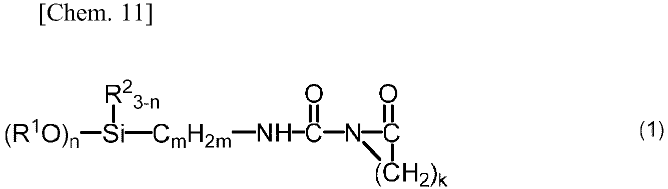 wherein R¹, R², m, n and k are the same as described above, 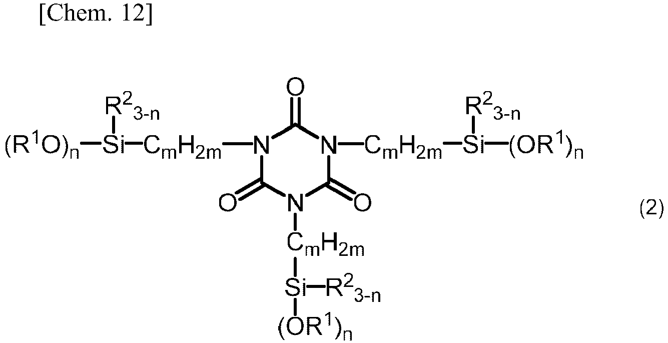 wherein R¹, R², m and n are the same as described above.

6. The method for reducing by-products according to claim 5, wherein the content of the organosilicon compound (B) is such that the ratio of the peak area of the organosilicon compound (B) to the total peak area of the organosilicon compound (A) and the organosilicon compound (B) in gel permeation chromatography is 0.1 to 10%.
